# EUROPEAN PATENT APPLICATION

(11) **EP 2 026 526 A2**
(43) Date of publication of application: **18.02.2009**
(21) Application number: 08012872.1
(22) Date of filing: 16.07.2008
(51) Int. Cl.: H04L 29/06

(54) **Method and system for creating secure network links utilizing a user's biometric identity on network elements**

(30) Priority: 20.07.2007 US 950940 P; 23.10.2007 US 877088
(71) Applicant: Broadcom Corporation, Irvine, CA 92617 (US)
(72) Inventor: Buer, Mark, Gilbert, AZ 85296 (US); Behzad, Arya, Poway, CA 92064 (US); Karaoguz, Jeyhan, Irvine, CA 92606 (US); MacInnis, Alexander, Ann Arbor, MI 48104 (US); Quigley, Thomas, Franklin, MA 28734 (US); Walley, John, Ladera Ranch, CA 92694 (US)
(74) Representative: Jehle, Volker Armin

(57) **Abstract**

An ad hoc network may be established between a handheld wireless communication device (HWCD) and one or more network resources utilizing biometric identity information. The biometric identity information may be associated with a user of the HWCD and utilized to select one or more network resources thus enabling secure communication between the HWCD and the one or more network resources. The HWCD may acquire the user's biometric identity information from the user and validate it utilizing stored biometric identity information. The one or more network resources may acquire the HWCD user's biometric identity information from the user and sign the biometric identity information with a private key. The HWCD may receive signed biometric identity information and associated public keys from each of the one or more network resources and validate the signed biometric identity information.

## Description

### CROSS-REFERENCE TO RELATED APPLICATIONS/INCORPORATION BY REFERENCE

This application makes reference to and claims priority to United States Provisional Application Serial No. 60/950940 (Attorney Docket No. 18651US01), filed on July 20, 2007, entitled "Method and System for Creating Secure Network Links Utilizing a User's Biometric Identity On Network Elements."

### FIELD OF THE INVENTION

Certain embodiments of the invention relate to secure communication. More specifically, certain embodiments of the invention relate to a method and system for creating secure network links utilizing a user's biometric identity on network elements.

### BACKGROUND OF THE INVENTION

The field of wireless communication has seen dramatic growth the last few years. In today's world, most people use their wireless devices, be it cellular phones, PDA's, laptops, media players and/or other devices, for various purposes, business and personal, on a constant and daily basis. Increasingly, people are able to access information according to their individual choice. For instance people may select music or videos from an electronic media store of their choice and play them on portable devices. In addition, the Internet allows people to access news and information at a time convenient for them rather then at specified broadcast times. In addition, many wireless solutions have been introduced, and have made tremendous strides into everyday life.

For example, the use of Wireless Personal Area Networks (WPAN) has been gaining popularity in a great number of applications because of the flexibility and convenience in connectivity they provide. WPAN systems generally replace cumbersome cabling and/or wiring used to connect peripheral devices and/or mobile terminals by providing short distance wireless links that allow connectivity within very narrow spatial limits (typically, a 10-meter range). WPAN may be based on standardized technologies, for example Class 3 Bluetooth (BT) technology. While WPAN may be very beneficial for certain applications, other applications may require larger service areas and/or capabilities.

To satisfy such needs, other technologies have been developed to provide greater wireless service. Wireless Local Area Networks (WLAN) systems may operate within a 100-meter range, for example. In contrast to the WPAN systems, WLAN provide connectivity to devices that are located within a slightly larger geographical area, such as the area covered by a building or a campus, for example. WLAN systems are generally based on specific standards, for example IEEE 803.11 standard specifications, and typically operate within a 100-meter range, and are generally utilized to supplement the communication capacity provided by traditional wired Local Area Networks (LANs) installed in the same geographic area as the WLAN system.

Other wireless solutions have evolved from traditional land-based communication technologies. For instance, cellular phones have become just about an absolute necessity in today's world. While cellular technology was merely intended to add an element of mobility to the traditional telephony service, this technology has grown beyond that initial purpose. Many modern cellular technologies, including such technologies as GSM/GPRS, UMTS, and CDMA3000 may incorporate substantial data capabilities. Most of today's cellular services may include such features as text messaging, video streaming, web browsing...etc.

Some mobile devices have the capability to utilize one or more wireless technologies. For instance, WLAN systems may be operated in conjunction with WPAN systems to provide users with an enhanced overall functionality. For example, Bluetooth technology may be utilized to connect a laptop computer or a handheld wireless terminal to a peripheral network resource, such as a keyboard, mouse, headphone, and/or printer, while the laptop computer or the handheld wireless terminal may also be connected to a campus-wide WLAN network through an access point (AP) located within the building. Also, cellular technology may allow use of the mobile phone as a form of wireless modem that allows connecting a laptop, for example, to the internet via a cellular network.

In short, wireless networks may exist to support handheld wireless communication devices. However, while handheld wireless communication devices have continued to grow in complexity and capability, these devices still continue to suffer from some major limitations, especially physical limitations and power.

Just as with other electronic devices, the handheld wireless communication devices have seen substantial growth in performance capability and speed. As such, they are finding applications in areas not predicted when first introduced to give users mobile telephony. They may comprise mini computers, multimedia players, GPS devices and many other applications, for example. As a result of the growth in performance, more and more applications are being added to wireless devices, thereby increasing complexity.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for creating secure network links utilizing a user's biometric identity on network elements substantially as shown in and/or described in connection with at least one of the figures, as set forth more completely in the claims.
According to an aspect, a method for secure communication comprises:
establishing an ad hoc network between a handheld wireless communication device (HWCD) and one or more network resources utilizing biometric identity information associated with a user of said HWCD to select and enable communication between said HWCD and said one or more network resources.
Advantageously, the method further comprises enabling secure communication between said HWCD and said one or more network resources based on said biometric identity information.
Advantageously, the method further comprises acquiring said biometric identity information of said user of said HWCD and said one or more network resources.
Advantageously, the method further comprises comparing on said HWCD, said acquired biometric identity information of said user of said HWCD, with a stored template of said user's biometric identity information.
Advantageously, said biometric identity information of said user of said HWCD is acquired by said one or more network resources.
Advantageously, the method further comprises signing by each of said one or more network resources, said acquired biometric identity information of said user of said HWCD, with a private key that is native and unique to each of said one or more network resources.
Advantageously, the method further comprises receiving on said HWCD, said signed acquired biometric identity information of said user of said HWCD from each of said one or more network resources.
Advantageously, the method further comprises receiving on said HWCD, a public key from each of said one or more network resources.
Advantageously, the method further comprises verifying on said HWCD with said received public key, said signatures on said received signed acquired biometric identity information of said user of said HWCD from each of said one or more network resources.
Advantageously, the method further comprises comparing on said HWCD, said received signed acquired biometric identity information of said user of said HWCD from each of said one or more network resources with a stored template of said user's biometric identity information.
According to an aspect of the invention, a system for secure communication comprises:
one or more processors utilized in a handheld wireless communication device (HWCD) that enables said HWCD to establish an ad hoc network between said HWCD and one or more network resources utilizing biometric identity information associated with a user of said HWCD to select and enable communication between said HWCD and said one or more network resources.
Advantageously, said one or more processors utilized in said HWCD enables secure communication between said HWCD and said one or more network resources based on said biometric identity information.
Advantageously, said one or more processors utilized in said HWCD enables acquisition of said biometric identity information of said user of said HWCD and said one or more network resources.
Advantageously, said one or more processors utilized in said HWCD enables comparing on said HWCD, said acquired biometric identity information of said user of said HWCD, with a stored template of said user's biometric identity information.
Advantageously, said biometric identity information of said user of said HWCD is acquired by said one or more network resources.
Advantageously, one or more processors enables each of said one or more network resources, to sign said acquired biometric identity information of said user of said HWCD, with a private key that is native and unique to each of said one or more network resources.
Advantageously, said one or more processors utilized in said HWCD enables reception of said signed acquired biometric identity information of said user of said HWCD from each of said one or more network resources.
Advantageously, said one or more processors utilized in said HWCD enables reception of a public key from each of said one or more network resources.
Advantageously, one or more processors utilized in said HWCD enables verification with said received public key, said signatures on said received signed acquired biometric identity information of said user of said HWCD from each of said one or more network resources.
Advantageously, said one or more processors utilized in said HWCD enables comparing said received signed acquired biometric identity information of said user of said HWCD from each of said one or more network resources with a stored template of said user's biometric identity information.
According to an aspect, a machine readable storage is provided having stored thereon, a computer program having at least one code section for secure communication, the at least one code section being executable by a machine for causing the machine to perform steps comprising:
establishing an ad hoc network between a handheld wireless communication device (HWCD) and one or more network resources utilizing biometric identity information associated with a user of said HWCD to select and enable communication between said HWCD and said one or more network resources.
Advantageously, said at least one code section comprises code for enabling secure communication between said HWCD and said one or more network resources based on said biometric identity information.
Advantageously, said at least one code section comprises code for acquiring said biometric identity information of said user of said HWCD and said one or more network resources.
Advantageously, said at least one code section comprises code for comparing on said HWCD, said acquired biometric identity information of said user of said HWCD, with a stored template of said user's biometric identity information.
Advantageously, said biometric identity information of said user of said HWCD is acquired by said one or more network resources.
Advantageously, said at least one code section comprises code for signing by each of said one or more network resources, said acquired biometric identity information of said user of said user of said HWCD, with a private key that is native and unique to each of said one or more network resources.
Advantageously, said at least one code section comprises code for receiving on said HWCD, said signed acquired biometric identity information of said user of said HWCD from each of said one or more network resources.
Advantageously, said at least one code section comprises code for receiving on said HWCD, a public key from each of said one or more network resources.
Advantageously, said at least one code section comprises code for verifying on said HWCD with said received public key, said signatures on said received signed acquired biometric identity information of said user of said HWCD from each of said one or more network resources.
Advantageously, said at least one code section comprises code for comparing on said HWCD, said received signed acquired biometric identity information of said user of said HWCD from each of said one or more network resources with a stored template of said user's biometric identity information.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary communication network comprising a point to point link between a mobile wireless cable modem (HWCD) and a network resource, in accordance with an embodiment of the invention.

FIG. 1B is a block diagram of an exemplary communication network comprising a link between a HWCD and a network resource via an access point, in accordance with an embodiment of the invention.

FIG. 1C is a block diagram illustrating exemplary communication between a handheld wireless communication device (HWCD) communicating and a plurality network resources via point to point links and via an intermediary device, in accordance with an embodiment of the invention

FIG. 2 is a block diagram of a plurality of exemplary handheld wireless communication devices (HWCD) and a plurality of exemplary network resources, in accordance with an embodiment of the invention.

FIG. 3 is a block diagram of exemplary functional blocks within an HWCD, in accordance with an embodiment of the invention.

FIG. 4 is a flow diagram illustrating exemplary steps for creating network links utilizing a user's biometric identity on network elements, in accordance with an embodiment of the invention.

FIG. 5 is a block diagram of an exemplary usage scenario comprising a user, an HWCD and three network resources.

### DETAILED DESCRIPTION OF THE INVENTION

Certain embodiments of the invention may be found in a method and system for creating secure network links utilizing a user's biometric identity information on network elements. Exemplary network elements may comprise a handheld wireless communication device (HWCD), one or more network resources and one or more network communication links. The HWCD may be a portable or handheld device capable of wireless and/or wire-line communication and of establishing secure network links among available local network resources. The invention is not limited to any specific communication technology and/or signaling protocol and may comprise any suitable form available. In this regard, signaling and/or control may occur in-band or out-of-band. The network resources may be capable of a variety of functional tasks with regard to processing, storing and rendering information. Such functionality may be activated on one or more of the network resources via control of the HWCD and/or according to a specified user's direction. Security operations within the established secure network may be enabled by biometric identity information. One or more network elements may comprise biometric identity sensing and processing capabilities, which may enable the user to select valid network resources by providing biometric identity information. In addition, the biometric identity information may enable the network elements to validate and/or process received data.

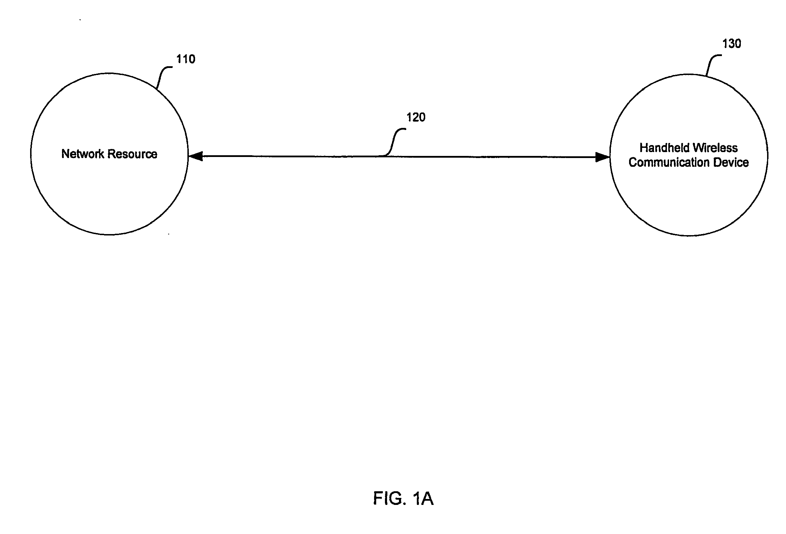

FIG. 1A is a block diagram of an exemplary communication network comprising a point to point link between a handheld wireless communication device (HWCD) and a network resource, in accordance with an embodiment of the invention. Referring to FIG. 1A, the exemplary communication network may comprise a network resource 110, a network link 120 and a HWCD 130.

The network resource 110 may comprise suitable logic, circuitry and or code that may enable communication via a wireless and/or wire-line link with the HWCD 130 directly. In this regard, the network resource 110 may be enabled to manage communication with other devices without the need for and intermediate device. For example the network resource 110 may comprise Bluetooth transceiver technology or another suitable communication technology. In this regard, the network resource 110 may comprise suitable logic, circuitry and/or code, including transmitters, receivers and/or transceivers, which may enable transmission and/or reception of signals using a plurality of wireless and/or wired technologies. In addition, the network resource 110 may comprise biometric identity information acquisition and/or processing capability that may identify a specified user and enable the specified user to select the network resource 110 for communication with the HWCD 130. Moreover, the network resource 110 may comprise suitable logic, circuitry and or code that may enable storage, processing and/or rendering of electronic media content.

The HWCD 130 may be a handheld or portable wireless device that may comprise suitable logic, circuitry and or code to communicate via a wireless and/or wire-line link with the network resource 110 directly. In this regard, the network resource may be enabled to manage communication with other devices without the need for and intermediate device. The HWCD may be enabled to handle one or more transmitter and/or receiver technologies, for example Bluetooth, WLAN and/or any cellular or any other suitable communication technology. In addition the network HWCD 130 may comprise biometric identity information acquisition and/or processing capability that may identify a specific user attempting to utilize the HWCD 130 and enable secure communication with a network resource 110. Moreover, the HWCD 130 may comprise suitable logic, circuitry and or code to store, process and/or render electronic media content.

The network link 120 may be a wireless and/or wire-line transport channel between the HWCD 130 and the network resource 110. For example, suitable wireless technologies may comprise Bluetooth, cellular and/or infrared. The network link 120 may not be limited to any specific network technology and/or communications protocol and may comprise any suitable form available.

In operation, the network resource 110 and the HWCD 130 may be located within close range, for example within 10 m. A specified user may be associated with the HWCD 130 via biometric identity information. A network connection between the HWCD 130 and the network resource 110 may be initiated by the specified user and identity of the specified user may be determined by the HWCD 130 via biometric identity information acquisition and processing. Biometric identity information may comprise physiological and/or behavioral information. In addition the user may select the network resource 110 for inclusion in a local network that may be established with the HWCD 130. The HWCD 130 may enable a secure direct communication link to the network resource 110. For example the direct secure link may comprise a personal area network (PAN) utilizing Bluetooth technology. The range in distance between the HWCD 130 and network resource 110 and the technology utilized for the network connection may vary and are not limited to those mentioned here.

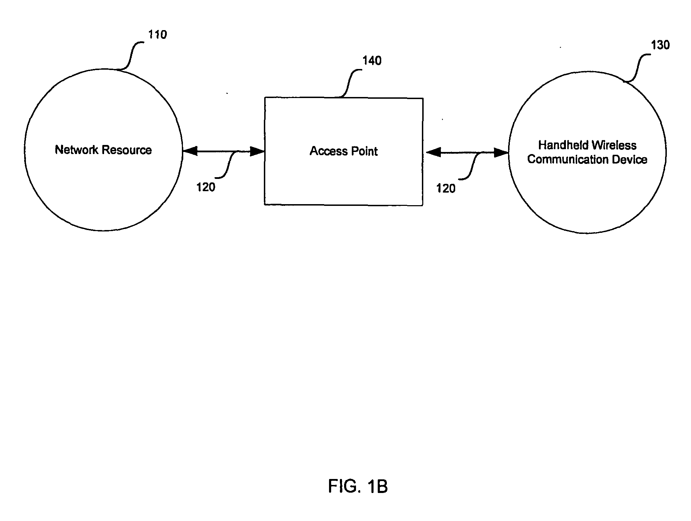

The FIG. 1B is a block diagram of an exemplary communication network comprising two network devices communicating via an intermediate device, in accordance with an embodiment of the invention. Referring to FIG. 1B, the exemplary communication network may comprise a network resource 110, one or more network links 120 an HWCD 130 and an access point (AP) 140.

The network resource 110 may be the same or similar to the one described in FIG. 1A. The network resource 110 may comprise suitable logic, circuitry and or code to communicate via a wireless and/or wire-line link with the HWCD 130 via an intermediate device for example an access point (AP) 140. In this regard, communication with other devices may be enabled via the AP 140. For example the network resource 110 may comprise a wireless local area network (WLAN) transceiver and/or IEEE 802.11 standards protocol or other suitable communication technologies. In addition the network resource 110 may comprise biometric identity information acquisition and/or processing capability that may identify a specific user attempting to access the network resource 110. Moreover, the network resource 110 may comprise suitable logic, circuitry and or code to store, process and/or render electronic media content.

The HWCD 130 in FIG. 1B, may be the same or similar to the HWCD described in FIG. 1A. The HWCD 130 may be a handheld or portable wireless device that may comprise suitable logic, circuitry and or code to communicate via a wireless and/or wire-line link with the network resource 110 via an intermediate device for example an access point (AP). In this regard, communication with other devices may be enabled via the AP. For example the network resource 110 may comprise a wireless local area network (WLAN) transceiver and/or IEEE 802.11 standards protocol or other suitable communication technologies. In addition the network HWCD 130 may comprise biometric identity information acquisition and/or processing capability that may identify a specific user attempting to utilize the HWCD 130. Moreover, the HWCD 130 may comprise suitable logic, circuitry and or code to store, process and/or render electronic media content.

The network links 120, may be the same or similar to the ones described in FIG. 1A. The network links 120 may comprise a wireless and/or wire-line transport channel between the HWCD 130 and the AP 140 as well as between the AP 140 and the network resource 110. For example, suitable wireless technologies may comprise a WLAN supporting an 802.11 standard protocol. The network link 120 may not be limited to any specific network technology and/or communications protocol and may comprise any suitable form available.

The access point (AP) 140 may comprise suitable logic, circuitry and/or code to function as an intermediary device linked between two or more communication devices. The access point 140 may comprise wireless and/or wire-line connectivity. For example, the access point 140 may manage information communicated between the HWCD 130 and network resource 110 via network links 120 supporting a WLAN and 802.11 standard protocol. In addition, the AP 140 may comprise communication links to other networks via a gateway for example. The network links 120 may not be limited to any specific network technology and/or communications protocol and may comprise any suitable form available.

In an exemplary embodiment of the invention, the network resource 110 and the HWCD 130 may be located within medium range of each other, for example within 100 m and may establish a wireless local area network (WLAN) via an intermediary device for example the AP 140. The range in distance between network elements and the communication technology utilized may vary and are not limited to any specific example.

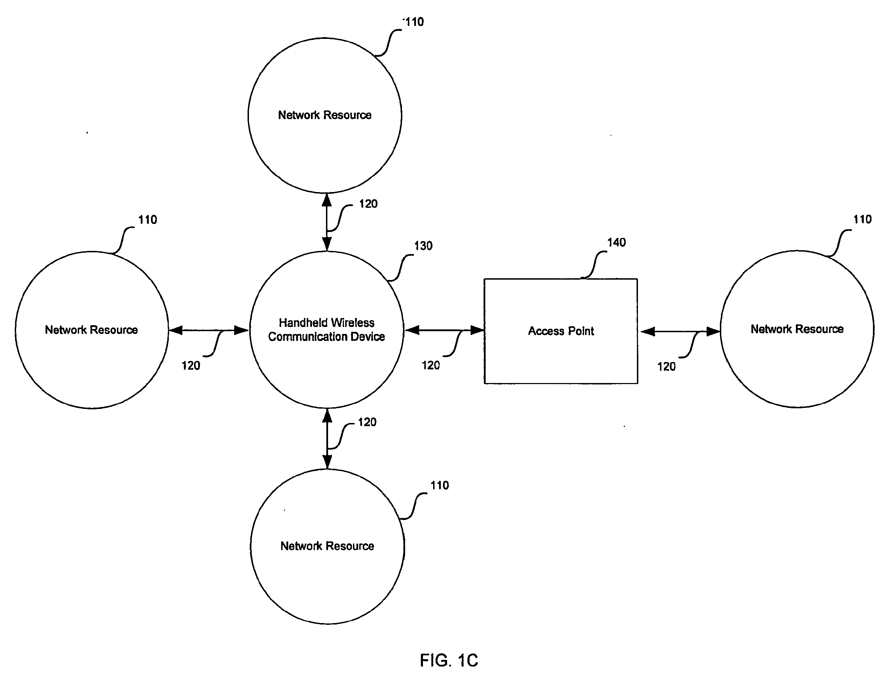

FIG. 1C is a block diagram illustrating exemplary communication between a handheld wireless communication device (HWCD) and a plurality network resources via point to point links and via an intermediary device, in accordance with an embodiment of the invention. Referring to FIG. 1C, the exemplary communication network may comprise a plurality of network resources 110, a plurality of network links 120, an access point (AP) 140 and a HWCD 130.

The network resources 110 may be the same or similar to the ones described in FIG. 1A and FIG. 1B. The network resources 110 may comprise suitable logic, circuitry and or code to communicate via a wireless and/or wire-line link with the HWCD 130 via a point to point connection and/or via an intermediate device for example an access point (AP) 140. In addition, the network resource 110 may comprise biometric identity information acquisition and/or processing capability that may identify a specific user attempting to access the network resource 110. Moreover, the network resource 110 may comprise suitable logic, circuitry and or code to store, process and/or render electronic media content.

The HWCD 130 in FIG. 1C, may be the same or similar to the HWCD described in FIG. 1A and FIG. 1B. The HWCD 130 may be a handheld or portable wireless device that may comprise suitable logic, circuitry and or code to communicate via a wireless and/or wire-line link with the network resource 110 directly and/or via an intermediary device for example an access point (AP) 140. In this regard, communication with other devices may be enabled via the AP 140. For example HWCD 130 may comprise a wireless local area network (WLAN) transceiver as well as for example a Bluetooth transceiver and may utilize different communication technologies for different communication links. In addition the network HWCD 130 may comprise biometric identity acquisition and/or processing capability that may identify a specific user attempting to utilize the HWCD 130. Moreover, the HWCD 130 may comprise suitable logic, circuitry and or code to store, process and/or render electronic media content.

The network links 120 may be the same or similar to the ones described in FIG. 1A and FIG. 1B. The network links 120 may comprise a wireless and/or wire-line transport channel between the HWCD 130 and one or more network resources 110 as well as between the AP 140 and one or more of the HWCD 130 and the network resource 110. The network link 120 may not be limited to any specific network technology and/or communications protocol and may comprise any suitable form available.

The access point (AP) 140 may be the same or similar to the one described in FIG. 1B. The AP 140 may comprise suitable logic, circuitry and/or code to function as an intermediary device linked between two or more communication devices. The access point 140 may comprise wireless and/or wire-line connectivity. For example, the access point 140 may manage information communicated between the HWCD 130 and the network resource 110 via network links 120 supporting a WLAN and 802.11 standard protocol. In various embodiments of the invention, the access point 140 may comprise gateway and/or routing capability. In addition, the AP 140 may comprise communication links to other networks via a gateway for example. The network links 120 may not be limited to any specific network technology and/or communications protocol and may comprise any suitable form available.

In operation, the network resource 110 and the HWCD 130 may be located within short or medium range of each other, for example within 10m or 100m and may establish a communication link directly or via an intermediary device for example the AP 140. The range in distance between network elements and the communication technology utilized may vary and are not limited to any specific example. The HWCD 130 may be utilized to establish a local network between a plurality of network resources. In this regard, the HWCD 130 may function as an ad hoc access point (AP) or intermediary device enabling communication between two or more network elements 110.

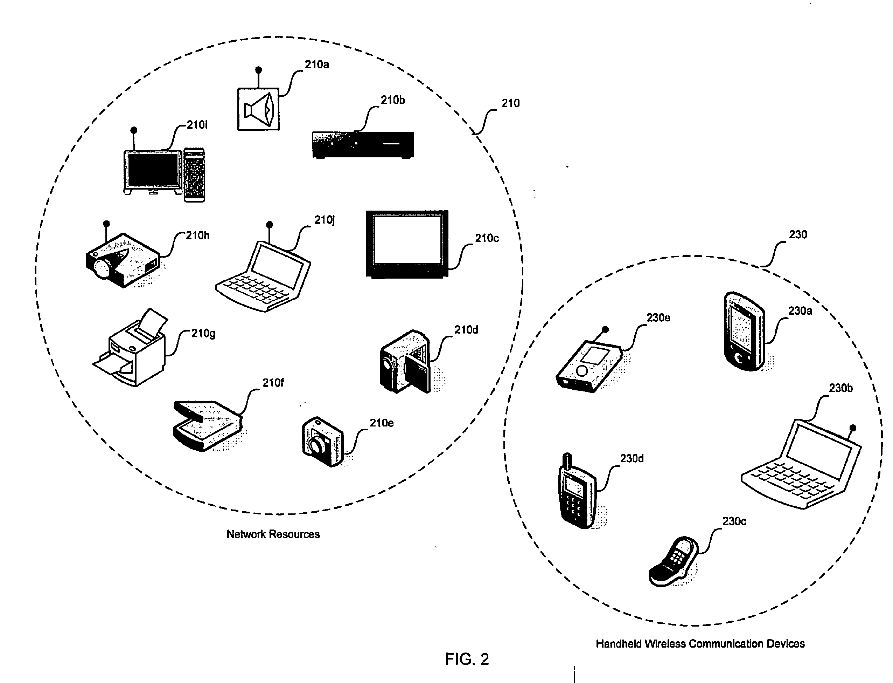

FIG. 2 is a block diagram of a plurality of exemplary handheld wireless communication devices (HWCD) and a plurality of exemplary network resources. Referring to FIG. 2, the exemplary form factors for network resources 110 within block 210 may comprise an audio device 210a, a digital media recording device 210b, a video device with high or standard definition video display 210c, a digital video camera 210d, a digital still camera 210e, a scanner 210f, a printer 210g, a digital media projector 210h, a personal computer 210i and a laptop 210j. Exemplary form factors for HWCDs 130 within block 230 comprise a personal digital assistant 230a, a laptop or palmtop 230b, a cellular phone 230c, a smart phone 230d and an electronic media player 230e. The form factors for network resources 110 represented within block 210 and HWCDs 130 represented in block 230 are not limited to those represented in FIG. 2 and may comprise any suitable device as described in figures 1A, 1B and 1C.

The form factors for network resources 110 represented in block 210 may comprise suitable logic, circuitry and or code to enable secure network communication operations, for example receiving and/or transmitting information as well as storing, processing and/or rendering information. The network resources 110 within block 210 may comprise biometric identity acquisition circuitry, logic and/or code that may be utilized to determine and identity of a user of the HWCD 130 and/or for selecting network elements that may be part of the ad-hoc network. In addition the exemplary network resources 110 may comprise general and or special purpose processors and/or transducers to enable consumption of electronic media content. For example, audio content may be processed and played over a speaker on the audio player 210a, the personal computer 210i and or the laptop 210j. In another exemplary embodiment of the invention, video content may be processed and displayed on the video display 210c, the personal computer 210i, the laptop 210j and the digital projector 210h. In another embodiment of the invention, the network resource 110 devices comprising the digital video camera 210d, the digital still camera 210e, the scanner 210f, the personal computer 210i and laptop 210j may provide electronic media content to an HWCD 130 within block 230 and/or to another network device 110 within block 210 via an HWCD 130 within block 230.

The form factors for the HWCDs 130 within block 230 may comprise suitable logic, circuitry and or code to enable secure network communication operations for example receiving and/or transmitting information as well as storing, processing and/or rendering information for a specified user. Moreover, the form factors represented in block 230 may be easily portable and/or mobile and enable communication services for a specified and/or identified user. They may enable hand-off from one or more base stations to one or more base stations while continuing to send or receive data. The HWCDs 130 represented within block 230 may comprise biometric identity information acquisition technology for identifying a specified user and network elements 110 selected by the specified user for secure network communication. In addition, the form factors in block 230 may enable multifunctional features. For example, the personal digital assistant PDA 230a may combine organizational applications with web browsing as well as HWCD 130 functionality, described in figures 1A, 1B and 1C. In another embodiment of the invention, the palmtop 230 may comprise personal computer features; voice communications and HWCD 130 functionality. Additionally, Cellular phone 230c and/or smart phone 230d may comprise voice features and HWCD 130 functionality. Moreover, the electronic media player 230e may play audio and video content as well as enable wireless communications features comprising HWCD 130 functionality.

In operation, a specified user may be associated with an HWCD 130 represented within block 230 via biometric identity information stored within the HWCD 130. The specified user may utilize the associated HWCD 130 from block 230 to establish communication links with one or more local network resources 110 within block 210. The specified user may initiate network connections by providing biometric identity information to the HWCD 130 as well as one or more selected network resources 110 represented within block 230. A secure network may be established between the HWCD 130 and the one or more selected network resources 110.

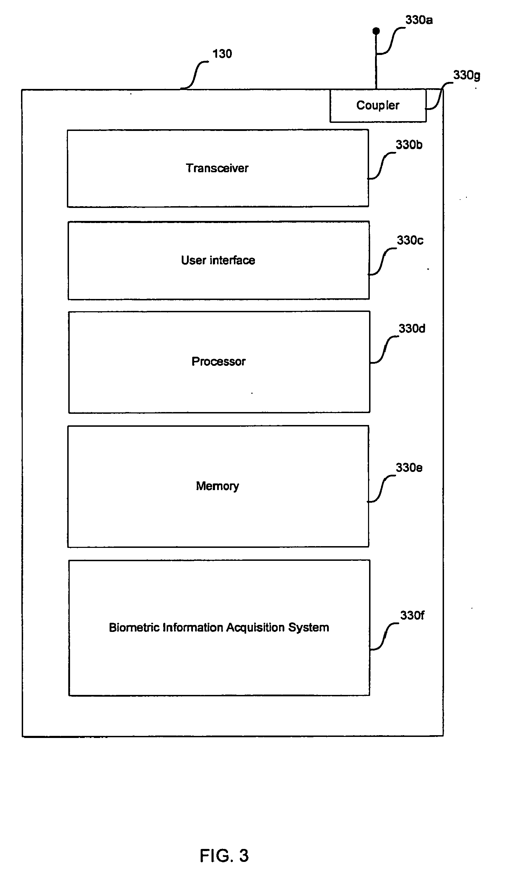

FIG. 3A is a block diagram of an exemplary handheld wireless communication device (HWCD) 130 describe in figures 1A, 1B and 1C enabled to establish secure network communication utilizing biometric identity information. Referring to FIG. 3A there is shown an HWCD 130 comprising an antenna 330a, a transceiver 330b, a user interface 330c, a processor 330d, a memory 330e and a biometric identity acquisition system 330f which may be implemented on a single chip or may be distributed on more than one chip.

The HWCD 130 may be a multifunctional device with a plurality of communication features described in figures 1A, 1B and 1C. In addition, the HWCD 130 may comprise a form factor similar to ones described in block 230 of FIG. 2. The HWCD 130 may be communicatively coupled with on or more of a plurality of network resources 110 as described in figures 1A, 1B and 1C.

The antenna 330a may be utilized to transmit and/or receive signals for one or more wireless technologies and/or one or more frequency bands. Moreover, one or more antennas 330a may be utilized for the HWCD 130. In some embodiments of the invention wire-line communication may be implemented rather than or in addition to wireless communication. The antenna 330a may be communicatively coupled with the transceiver 330b.

The coupler 330g may be communicatively coupled with the antenna 330a and the transceiver 330b. The coupler 330g may condition the RF energy between the antenna the transceiver. For example, the coupler may be enabled to match impedance between the antenna and transceiver. In another embodiment of the invention, the couplers 330g may duplex forward and reverse signals and/or diplex dual band signals. In addition, the coupler may filter out unwanted out-of-band signals.

The transceiver block 330b may comprise suitable logic, circuitry and or code to support one or more transceiver technologies depending on functional capabilities of the HWCD 130. For example, the transceiver block 330b may comprise Bluetooth, cellular, frequency modulation FM and/or WLAN transmitters and/or receivers. The HWCD 130 is not limited to these specific transceiver technologies and may utilize any suitable wireless technology and/or signaling protocol. In addition, the transceiver block 330b may utilize one or more frequency bands according to the wireless technology in use and local government regulations. Moreover, the transceiver block 330b may implement transmitter modulation and/or receiver demodulation in the digital domain and/or the analog domain. The transceiver block 330b may be communicatively coupled with the antenna 330a, the processor 330d and/or the memory 330e.

The user interface block 330c may comprise suitable logic, circuitry and or code to handle a plurality of user input and/or output technologies. For example, the user may input information to the HWCD 130 via voice commands or audio input, keyboard and/or key pad commands, various scrolling and selecting systems, still or video images and/or handwriting with a stylus and touch sensitive pad or another type of input. In addition, the user interface 330c may handle information output to a user via for example, a visual display, a speaker and/or a vibration mode for example. The user interface block 330c may be communicatively coupled with the processor 330d, the memory 330e and/or the biometric identity information acquisition block 330f.

The processor block 330d may comprise suitable logic, circuitry and or code to function as one or more general purpose processors and/or one or more special purpose processors. In addition to supporting communication, signal processing and/or electronic media rendering operations, the processor 330d may handle establishing network connections and exchanging data with one or more network resources 110. Moreover, the processor block 330d may support biometric identity information processing comprising extracting significant features from acquired biometric identity information and generating a template comprising a binary representation of the significant features. In this regard, the processor 330d may store the biometric identity information template in memory 330e so that it may be compared with biometric identity information acquired subsequently for user validation operations. The processor block 330d may be communicatively coupled with the memory 330e, the transceiver 330b, the user interface 330c and the biometric identity information acquisition block 330f.

The memory block 330e may comprise suitable logic, circuitry and/or code to store and retrieve data for the HWCD 130. In addition to supporting communication, signal processing and electronic media content storage, the memory 330e may store biometric identity information templates. The memory block 330e may be communicatively coupled with the processor block 330d, the biometric identity information acquisition block 330f, the transceiver 330b and the user interface 330c.

The biometric identity information acquisition system 330f may comprise suitable logic, circuitry and/or code to sense or detect one or more forms of biometric identity information. The biometric identity information may be physiological and/or behavioral. For example, physiological information may comprise finger prints, EKG and/or face, hand or iris geometry. Behavioral information may comprise voice, signature and/or key stroke dynamics. The biometric identity information acquisition system may be communicatively coupled with the processor 330d, the memory 330e and/or the user interface 310c.

In operation, a user may be associated with an HWCD 130 by acquiring within the HWCD 130, biometric identity information from the user. In this regard, a user may present biometric identity information to a biometric identity acquisition system 310f. For example, the user may touch a finger print scanner and/or an EKG sensor on the HWCD 130. Significant features of the biometric identity information may be extracted and represented in a binary template by the processor 310d. The template may be stored within the memory 310e. Subsequently, a user may be validated for access to the HWCD 130 by again presenting biometric identity information to the biometric identity information acquisition system 310f. The processor 310d may extract significant features from the newly acquired biometric identity information. The extracted significant features may be compared with the stored template and if they match, access may be granted to the user.

The HWCD 130 may be utilized by a valid user to establish a secure ad hoc network with one or more network resources 110. In this regard, a valid user's biometric identity information may be utilized to access the HWCD 130 and also to select the one or more network resources 110 for participation in the ad hoc network. The user may present biometric identity information to the one or more selected network resources 110. The one or more network resources 110 may sign the biometric identity information with a private key and may send to the HWCD 130 the signed biometric identity information and a public key that may be utilized to verify the signature on the biometric identity information.

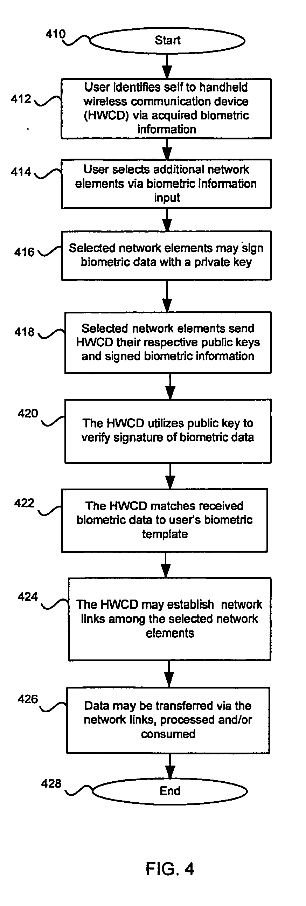

FIG. 4 is a flow diagram illustrating exemplary steps for creating network links utilizing a user's biometric identity information on network elements, in accordance with an embodiment of the invention. Referring to FIG. 4, after start step 410, in step 412 a user identifies self to HWCD 130 and user's biometric identity information may be represented by a template within the HWCD 130. In step 414, the user may input biometric identity information for example via a finger print scan, to one or more network resources 110 to select the one or more network resources 110 for participation with the HWCD 130 in an ad hoc network. In step 416, the selected network resources 110 may sign the biometric identity information with a private key. In step 418, the selected one or more network resources 110 may send the signed biometric identity information and their respective public keys to the HWCD 130. In step 420, the HWCD 130 may utilize the received public key to verify the signature on the signed biometric identity information. In step 422, the HWCD 130 may compare the received biometric identity information with the user's stored biometric identity information template. In step 424, if the received biometric identity information matches the stored biometric identity information template, the HWCD may establish network links with one or more of the selected network elements. In step 426, data may be transferred among the HWCD 130 and the one or more selected network resources 110 and consumed. Step 428 is an end step.

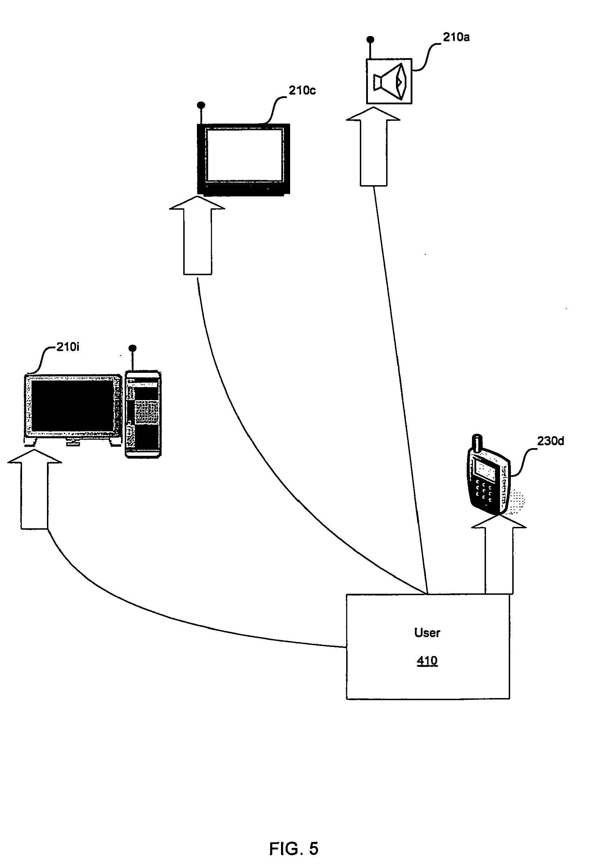

FIG. 5 is a block diagram of an exemplary usage scenario comprising a user, an HWCD and three network resources. Referring to FIG. 5, the exemplary ad hoc network may comprise an HWCD in a smart phone form factor 230d, a personal computer 210i, a video display 210c and a speaker system 210a. In addition, the user is represented in block 410.

The HWCD 230d in a smart phone form factor may be the same or similar to the smart phone 230d described in FIG. 2. The HWCD 230d may comprise suitable logic, circuitry and or code to establish a secure ad hoc network with the personal computer 210i, the video display 210a and speaker system 230d. The HWCD 230d may be enabled to sense and process the user 410's biometric identity information. For example, the HWCD 230d may comprise a fingerprint scanner. The HWCD 230d may be communicatively coupled with the personal computer 210i, the video display 210c, the speaker system 210a and the user 410.

The personal computer 210i may be the same or similar to the personal computer 210i described in FIG. 2. The personal computer 210i may comprise suitable logic, circuitry and or code enabling it to store and process electronic media content. In addition the personal computer 210i may be enabled to participate in the secure ad hoc network in accordance with an embodiment of the invention. Moreover, the personal computer 210i may be enabled to sense and process the user 410's biometric identity information. For example, the personal computer 210i may comprise a fingerprint scanner. The personal computer 210i may be communicatively coupled with the HWCD 230d, the video display 210c, the speaker system 210a and the user 410.

The video display 210c may be the same or similar to the video display 210c described in FIG. 2. The video display 210c may comprise suitable logic, circuitry and or code enabling it to display electronic media content. In addition, the video display 210c may be enabled to participate in the secure ad hoc network in accordance with an embodiment of the invention. Moreover, the video display 210c may be enabled to sense and process the user 410's biometric identity information. For example, the video display 210c may comprise a fingerprint scanner. The video display 210c may be communicatively coupled with the HWCD 230d, the personal computer 210i, the speaker system 210a and the user 410.

The speaker system 210a may be the same or similar to the speaker system 210a described in FIG. 2. The video display 210c may comprise suitable logic, circuitry and or code enabling it to render audio content. In addition, the speaker system 210a may be enabled to participate in the secure ad hoc network in accordance with an embodiment of the invention. Moreover, the speaker system 210a may be enabled to sense and process the user 410's biometric identity information. For example, the speaker system 210a may comprise a fingerprint scanner. The speaker system 210a may be communicatively coupled with the HWCD 230d, the video display 210c, the personal computer 210i and the user 410.

The user 410 may utilize the HWCD 230d to establish a secure ad hoc network. The user may wish to establish an ad hoc network with local network resources comprising the personal computer 210i, the video display 210c and the speaker system 210a. The user may wish to retrieve one or more electronic media files from the personal computer 210i and render the electronic media content on the video display 210c and the speaker system 210a.

In operation, the user 410 may scan their finger by touching the finger print scanner on the HWCD 230d in order to validate his or her identity on the HWCD 230d. In addition, the user may select network elements for participation in the ad hoc network by scanning his or her fingerprint into the fingerprint scanners on the personal computer 210i, the video display 210c and the speaker system 210a.

The personal computer 210i, the video display 210c and/or the speaker system 210a may sign data representing the finger print scans with their respective private keys and may send the signed finger print data and their respective public keys to the HWCD 230d.

The HWCD 230d may receive the signed finger print data and the public keys from the personal computer 210i, the video display 210c and/or the speaker system 210a and may verify the respective signatures with the respective public keys. The HWCD 230d may validate the received finger print data. Accordingly, the HWCD 230d may establish a secure ad hoc network among itself and the personal computer 210i, the video display 210c and the speaker system 210a. The electronic media content may be transferred to the video display 210i and speaker system 210a and rendered via the control of the HWCD 230d.

In one embodiment of the invention, an ad hoc network may be established between a handheld wireless communication device (HWCD) 130 and one or more network resources 110 utilizing biometric identity information. The biometric identity information may be associated with a user of the HWCD 130. In addition, the biometric identity information may be utilized to select one or more network resources 110 and enable communication between the HWCD 130 and the one or more network resources 110.

The HWCD 130 may acquire the user's biometric identity information and compare it with a stored template of the HWCD user's biometric identity information. In addition, the HWCD 130 user's biometric identity information may be acquired by the one or more network resources 110. The one or more network resources 110 may each sign the biometric identity information with their private keys and send the signed biometric identity information and public keys to the HWCD 130. In this regard, the HWCD 130 may receive the signed biometric identity information from each of the one or more network resources 110 and may verify the respective signatures with the respective received public keys. The HWCD 130 may compare the received biometric identity information from the one or more network resources 110 with the user's stored biometric identity information.

Certain embodiments of the invention may comprise a machine-readable storage having stored thereon, a computer program having at least one code section for secure communication, the at least one code section being executable by a machine for causing the machine to perform one or more of the steps described herein.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for secure communication, the method comprising:
establishing an ad hoc network between a handheld wireless communication device (HWCD) and one or more network resources utilizing biometric identity information associated with a user of said HWCD to select and enable communication between said HWCD and said one or more network resources.

2. The method according to claim 1, comprising enabling secure communication between said HWCD and said one or more network resources based on said biometric identity information.

3. The method according to claim 1, comprising acquiring said biometric identity information of said user of said HWCD and said one or more network resources.

4. The method according to claim 3, comprising comparing on said HWCD, said acquired biometric identity information of said user of said HWCD, with a stored template of said user's biometric identity information.

5. The method according to claim 1, wherein said biometric identity information of said user of said HWCD is acquired by said one or more network resources.

6. A system for secure communication, the system comprising:
one or more processors utilized in a handheld wireless communication device (HWCD) that enables said HWCD to establish an ad hoc network between said HWCD and one or more network resources utilizing biometric identity information associated with a user of said HWCD to select and enable communication between said HWCD and said one or more network resources.

7. The system according to claim 6, wherein said one or more processors utilized in said HWCD enables secure communication between said HWCD and said one or more network resources based on said biometric identity information.

8. The system according to claim 6, wherein said one or more processors utilized in said HWCD enables acquisition of said biometric identity information of said user of said HWCD and said one or more network resources.

9. The system according to claim 8, wherein said one or more processors utilized in said HWCD enables comparing on said HWCD, said acquired biometric identity information of said user of said HWCD, with a stored template of said user's biometric identity information.

10. A machine readable storage having stored thereon, a computer program having at least one code section for secure communication, the at least one code section being executable by a machine for causing the machine to perform steps comprising:
establishing an ad hoc network between a handheld wireless communication device (HWCD) and one or more network resources utilizing biometric identity information associated with a user of said HWCD to select and enable communication between said HWCD and said one or more network resources.
